# EUROPÄISCHE PATENTSCHRIFT

(11) **EP 0 634 600 B1**
(45) Veröffentlichungstag und Bekanntmachung des Hinweises auf die Patenterteilung: **02.05.1997**
(21) Anmeldenummer: 93111354.2
(22) Anmeldetag: 15.07.1993
(51) Int. Cl.: F16L 37/084, H02G 3/06

(54) **Verbindungs- und Anschlussstück für Wellrohre**
Connector and fitting for corrugated pipes
Connecteur et raccord pour tuyaux ondulés

(43) Veröffentlichungstag der Anmeldung: 18.01.1995
(73) Patentinhaber: PMA ELEKTRO AG, 8610 Uster (CH)
(72) Erfinder: Schwarz, Ernst, CH-8604 Hegnau-Volketswil (CH); Fastenrath, Ulrich, CH-8640 Rapperswil (CH)
(74) Vertreter: Bruderer, Werner

(56) Entgegenhaltungen:
- EP-A- 0 465 896
- AT-B- 388 426
- DE-A- 3 940 114
- US-A- 4 440 425
- US-A- 4 836 580

## Beschreibung

Die Erfindung betrifft ein Verbindungs- und Anschlussstück für Wellrohre mit mindestens einem, von einem Gehäuse umschlossenen Kernhohlraum mit einer Einstecköffnung zur Aufnahme eines Endes des Rohres und einem gegenüberliegenden Durchlass, einer zwischen dem Aussenmantel des Endes des Rohres und dem Innenmantel des Kernhohlraumes des Gehäuses angeordneten Hülse, wobei diese Hülse an einem Ende durch Einschnitte in Mantelelemente aufgeteilt ist, die freien Enden dieser Mantelelemente elastisch beweglich sind und an der Aussenseite der Mantelelemente Wirkelemente sowie an der Innenseite der elastisch beweglichen Mantelelemente Nocken für den Eingriff in die Vertiefungen am Mantel des Wellrohres vorgesehen sind und mit einem Aussenring zur Feststellung der elastischen Mantelelemente in einer Sperrposition.

Wellrohre finden in einem breiten Bereiche Anwendung, insbesondere auch als Schutzschläuche für Kabel, z.B. Steuerkabel. Es sind auch verschiedene Ausführungsformen von Verbindungs- und Anschlussstücken bekannt, mittels welchen Wellrohre miteinander verbunden oder an Gehäuse angeschlossen werden können. In der amerikanischen Patentschrift US 4 440 425 wird beispielsweise eine derartige Lösung beschrieben. Dabei besteht das Verbindungs- bzw. Anschlussstück aus einem rohrförmigen Gehäuse mit einem Kernhohlraum, in welchen das Ende eines Wellrohres eingeschoben wird. An den stirnseitigen Enden des Gehäuses sind Einschnitte angebracht, durch welche laschenförmige Elemente aus dem Mantel des Gehäuses ausgeschnitten werden. Diese Elemente tragen an ihrer Innenseite Nocken, welche in die Vertiefungen am Mantel des Wellrohres eingreifen. Zum Einschieben des Wellrohres in das Gehäuse des Verbindungs- bzw. Anschlussstückes können die Laschen nach aussen aufgeweitet und dadurch das Rohr eingeschoben werden. Zur Herstellung der Verbindung zwischen Verbindungs- bzw. Anschlussstück und Wellrohr befindet sich auf dem Gehäuse mindestens ein Ueberwurfring, welcher auf dem Gehäusemantel verschiebbar ist. An den Gehäuselaschen befindet sich ein Feststellnocken und ein Endanschlag, welche der Positionierung des Ueberwurfringes in der Klemmposition dienen. Vor dem Einschieben des Rohrendes befindet sich der Ueberwurf- bzw. Aussenring in einer Position hinter dem Feststellnocken, sodass die Gehäuselaschen durch Eigenelastizität nach aussen auffedern können oder vom eingeschobenen Rohr verdrängt werden. Sobald das Rohrende im Verbindungs- bzw. Anschlussstück in die gewünschte Position gebracht worden ist, wird der Ueberwurfring über den Feststellnocken geschoben, und die Gehäuselaschen werden an den Mantel des Wellrohres angepresst. Dabei ist der Innendurchmesser des Ueberwurfringes so bemessen, dass eine feste formschlüssige Verbindung entsteht. Der Ueberwurfring befindet sich in dieser Verbindungsposition zwischen dem Feststellnocken und dem Endanschlag, welche so ausgebildet sind, dass der Ring unter normalen Betriebsbedingungen in dieser Position festgehalten wird. Durch die in das Gehäuse eingeschnittenen Gehäuselaschen wird die Festigkeit des hier beschriebenen Verbindungs- und Anschlussstückes erheblich reduziert. Bei starken Belastungen können Brüche an den Endteilen der Laschen oder an anderen Teilen des Gehäuses auftreten. Dadurch ist die Sicherheit der Verbindung nicht immer gewährleistet. Bei unsorgfältiger Herstellung der Verbindung zwischen Rohr und Anschlussstück besteht auch die Gefahr, dass der Ueberwurfring über die Laschen geschoben wird, bevor das Rohrende genügend in das Anschlussstück eingeschoben wurde. Damit besteht die Gefahr, dass das Rohrende nicht richtig gehalten wird und aus der Verbindung ausgerissen werden kann. Da der Ueberwurfring, welcher des Sperrelement für die Laschen bildet, am Aussenmantel des Anschluss- bzw. Verbindungsstückes liegt, besteht auch die Gefahr, dass er unbeabsichtigt aus der Sperrposition in die Ausgangsposition geschoben wird. In diesem Falle würde die Verbindung zwischen Rohrende und Anschlussstück gelöst, was unerwünscht ist. Wird der Ring und der Feststellnocken so stark ausgebildet, dass ein unbeabsichtigtes Lösen praktisch vermieden wird, so kann die Sperrverbindung ohne Zerstörung des Verbindungs- oder Anschlussstückes kaum mehr gelöst werden. Damit wird die Handhabung derartiger Verbindungen bei Demontage oder Aenderungsarbeiten schwierig und aufwendig.

Aus DE-A-3 626 403 ist eine weitere Lösung bekannt, bei welcher die federnden Elemente am Gehäuse nicht am vorderen Ende als freie Laschen angeordnet, sondern in das Gehäuse integriert sind. Dadurch wird eine höhere Festigkeit des Gehäuses erreicht, da das Gehäuse am vordern Ende ringförmig geschlossen bleibt. Die Feststellung der federnden Elemente erfolgt auch hier mit Hilfe eines Aussenringes in der Form einer Ueberwurfhülse. Diese Ueberwurfhülse liegt ebenfalls am Aussenmantel des Gehäuses des Verbindungs- bzw. Anschlussstückes auf und wird in axialer Richtung auf diesem Mantel verschoben. Auch hier besteht die Gefahr, dass die Ueberwurfhülse unbeabsichtigt verschoben und dadurch die Verbindung zwischen Rohrende und Anschlussstück gelöst wird. Soll dies vermieden werden, so besteht auch hier die Tendenz zu einer Verbindung, welche nicht mehr gelöst werden kann. Auch bei diesem Lösungsvorschlag kann das Rohrende im Verbindungs- bzw. Anschlussstück festgeklemmt werden, bevor es ganz in den Kernhohlraum eingeschoben wurde. Dementsprechend besteht die Gefahr einer ungenügenden Verbindung und der Möglichkeit, dass das Rohrende aus dem Anschlussstück ausgerissen werden kann.

EP 0 331 116 beschreibt eine weitere bekannte Lösung, bei welcher das Prinzip von elastischen Laschen, beziehungsweise Fingern angewendet wird. Diese elastischen Finger sind an einer Hülse angeordnet, wobei die Verwendung einer derartigen Hülse bereits aus US 4 045 055 vorbekannt ist. Die Hülse ist dabei zwischen dem Rohrende und dem Anschlussstück angeordnet. Die freien Enden der Finger weisen Verdickungen auf, welche Wirkelemente bilden und einerseits mit einer Schulter am Anschlusstück zusammenwirken und anderseits mit nach innen gerichteten Nocken in das Wellrohr eingreifen. Wenn das Rohr auf Zug belastet wird, werden die Nocken gegen das Rohr gedrückt, indem an den Wirkelementen schräge Auflaufflächen mit den Schultern am Anschlusstück zusammenwirken. Die schräge Auflauffläche an den Wirkelementen ist dabei speziell geformt, um die Kräfte in die gewünschte Richtung zu lenken. Die beschriebene Lösung weist jedoch erhebliche Nachteile auf. Die Hülse muss vor dem Zusammenbau von Rohrende und Anschlussstück in das Anschlussstück eingebaut werden und zwar in die Endposition. Ein teilweises oder vollständiges Einschieben der Hülse in das Anschlussstück mit Hilfe des Rohrendes ist nicht möglich. Es besteht auch keine Sicherheit, dass das Rohrende vollständig in das Anschlussstück eingeschoben ist. Eventuell greift der Nocken nur in die erste Nute ein, womit die Sicherheit gegen das Ausreissen des Rohrendes erheblich reduziert wird. Das Anbringen einer Dichtung ist dabei erschwert und deren Funktion nicht gewährleistet. Bei einer der vorgeschlagenen Lösung, bei welcher die Hülse einen, ausserhalb der Stirnseite des Anschlusselemetes liegenden Flansch aufweist, besteht die Gefahr, dass die Verbindung ungewollt gelöst wird. Dies, indem z.B. die Hülse durch ein benachbartes Objekt oder durch Manipulationen an einem benachbarte Anschluss in das Anschlusselement hinein gestossen und damit die Sperrung aufgehoben wird. Der Lösungsvorschlag gemäss Fig.5 in EP 0 331 116 ist nur unter grossen Schwierigkeiten anwendbar. Wenn die Hülse in das Anschlusselement eingelegt ist, kann das Rohrende nicht eingeschoben werden. Beim Einschieben steht das Rohrende am vorderen Teil der Wirkelemente an und stösst die Hülse in das Anschlusselement hinein. Die Wirkelemente stossen dann an den hinteren Anschlagflächen im Anschlusselement an und können radial nicht mehr ausweichen. Als Folge davon kann das Rohrende nicht in die Sperrposition eingeschoben werden, da die Sperrnocken den Innenraum der Hülse blockieren. Sollte es trotzdem gelingen, diese Verbindung zusammenzubauen, z.B. mit einem Spezialwerkzeug, so kann sie nicht mehr gelöst werden. Eine Anweisung zur Überwindung dieser Schwierigkeiten ist nicht gegeben. Bei beiden Lösungsvarianten ist nur ein Nocken für den Eingriff in das Rohrende vorhanden, wodurch die maximale Auszugskraft begrenzt ist.

Es ist Aufgabe der vorliegenden Erfindung, ein Verbindungs- und Anschlussstück zu schaffen, bei welchem die Hülse mit Hilfe des Rohrendes in das Anschlussstück eingeschoben wird und dabei eine Kontrolle der Einschubtiefe möglich ist, die gesperrte Verbindung nicht unbeabsichtigt gelöst werden kann, die Verbindung zwischen Rohrende und Verbindungs- und Anschlussstück erst dann erfolgt, wenn das Rohrende genügend weit eingeschoben ist, in der Einbauposition des Rohrendes im Verbindungs- und Anschlussstück keine zusätzlichen Verschiebungen oder Bewegungen von Teilen notwendig sind, sondern die Feststellung des Rohres selbsttätig erfolgt und bei welchem das Lösen der Verbindung zwischen Rohr und Anschlussstück mit Hilfe eines Werkzeuges in der Einschubrichtung des Rohres möglich ist. Im weitern soll das Anbringen von mehreren Sperrnocken ermöglicht werden, der Einbauabstand zwischen benachbarten Anschlussstücken auf ein Minimum reduziert sein, die Einlage von Dichtungen zwischen Rohrende und Gehäuse der Verbindungs- und Anschlussstücke ermöglicht werden und die Vormontage der Hülse, vor dem Zusammenstecken von Rohr und Anschluss, am Anschlussstück oder am Rohrende möglich sein.

Diese Aufgabe wird durch die im Patentanspruch 1 definierten Merkmale gelöst. Vorteilhafte Weiterbildungen der Erfindung ergeben sich nach den Merkmalen der abhängigen Patentansprüche.

Die erfindungsgemässe Anordnung einer Hülse zwischen dem Wellrohr und dem Gehäuse des Verbindungs- bzw. Anschlussstückes ermöglicht eine optimale Anpassung der Bauelemente an die geforderten Bedingungen. Das Gehäuse kann entsprechend den Festigkeitsanforderungen an die Verbindung dimensioniert und gestaltet werden, und an der Aussenfläche des Gehäuses sind keine Elemente vorhanden, welche durch benachbarte Anschlussstücke oder Maschinenteile gestört oder betätigt werden könnten. Die vom Gehäuse unabhängige Hülse, welche die federnden Elemente trägt, kann ebenfalls optimal an die Anforderungen der Verbindung zwischen Rohrende und Anschlussstück angepasst werden. Da die Bauteile üblicherweise aus Kunststoff bestehen, können für das Gehäuse und die Hülse unterschiedliche Materialien eingesetzt werden, welche optimal auf die Anforderungen abgestimmt sind. Die federnden Mantelelemente an der Hülse können von Anfang an so ausgestaltet werden, dass sie in der Montageposition, d.h. vor dem Einschub des Rohrendes so weit nach aussen aufgefedert sind, dass der freie Innendurchmesser der Hülse grösser ist als der Aussendurchmesser des Rohrendes. Dadurch ist gewährleistet, dass das Rohrende bis an den Kragen am innern Ende der Hülse eingeschoben wird, bevor die Hülse verschoben und damit der Klemmvorgang zwischen Hülse und Rohrende eingeleitet wird. Dadurch ist gewährleistet, dass das Rohrende genügend weit in die Hülse eingeschoben wird und nach dem Feststellen im Gehäuse auch die gewünschte Festigkeit der Verbindung erreicht wird. Da das Rohrende am Kragen des innern Endes der Hülse anliegt, wird durch das weitere Einschieben des Rohrendes in den Kernhohlraum des Gehäuses die Hülse in das Gehäuse hineingestossen und dadurch die federnden Mantelelemente durch den Aussenring des Gehäuses gegen den Mantel des Wellrohres gepresst. Bei Erreichen der Einbauposition, d.h. wenn das Rohrende und die Hülse vollständig in das Gehäuse eingeschoben sind, wirkt das Sperrelement am Aussenmantel der Hülse mit einem Gegenstück am Gehäuse zusammen und hält die Hülse in dieser Position fest. Da die Nocken an der Innenseite der federnden Mantelelemente der Hülse in die Vertiefungen am Wellrohrende eingreifen, ist dadurch das Wellrohrende im Gehäuse des Verbindungs- bzw. Anschlussstückes festgestellt, und die gewünschte Verbindung ist gewährleistet. Das Gegenstück im Gehäuse zum Sperrelement kann durch eine Vertiefung, einen Durchbruch oder eine andere geeignete an sich bekannte Ausgestaltung gebildet sein.

In der Montageposition, d.h. vor dem Zusammenschieben von Rohr und Anschlussstück, wird die Hülse durch ein Positionierelement, welches in dieser Position ebenfalls in das Gegenstück am Gehäuse eingreift, im Gehäuse gehalten. Dadurch ist es möglich, Gehäuse und Hülse vorzumontieren. Es ist aber auch möglich, die Hülse vor dem Zusammenbau auf das Rohrende aufzustecken und dann die Verbindung herzustellen. Der Bereich des Gehäuses zwischen der Frontfläche und dem Gegenstück im Gehäuse ist so gestaltet, dass sich dieser Bereich elastisch aufweiten lässt und sowohl das Positionierelement als auch das Sperrelement an der Hülse von aussen nach innen durchgeschoben werden können. Im weitern ist in diesem Bereich eine Aussparung eingeordnet, welche die Einführung eines Werkzeuges in axialer Richtung des Anschlussstückes zwischen Hülse und Gehäuse ermöglicht. Dies bringt den Vorteil, dass mit Hilfe eines axial einzuführenden Werkzeuges die Sperrverbindung zwischen Gehäuse bzw. dem Gegenstück im Gehäuse und dem Sperrelement aufgehoben werden kann. Ein weiterer Vorteil besteht darin, dass durch die Möglichkeit, die Verbindung zwischen Rohr und Anschlussstück in der axialen Einschubrichtung des Rohres zu lösen, Anschlussstücke direkt nebeneinander und aneinander anstossend angeordnet werden können, da keine Zugänglichkeit zum Aussenmantel des Gehäuses erforderlich ist. Dadurch können z.B. mehrere Einführungen von Kabeln im Gehäuse kompakter ausgebildet werden. Zudem muss die seitliche Zugänglichkeit zu den Anschlussstücken nicht mehr gewährleistet sein, was in der Praxis häufig mit Schwierigkeiten verbunden war. Die vom Gehäuse unabhängige Gestaltungsmöglichkeit der Hülse erlaubt eine einfache Anpassungsmöglichkeit an verschiedene Aussenformen von Wellrohren, indem nur die Nocken der Hülse an die Aussenform des Rohres angepasst werden müssen, ansonsten jedoch das gleiche Gehäuse Verwendung finden kann. Ein weiterer Vorteil der erfindungsgemässen Ausführung besteht auch darin, dass am innern Ende der Hülse in einfacher Weise eine Dichtungskappe angeordnet werden kann, welche eine vollständige Dichtigkeit zwischen Gehäuse und Rohrende gewährleistet. Je nach Bedürfnissen kann auch die Ausgestaltung dieser Dichtkappe ohne Veränderungen am Gehäuse unterschiedlich ausgestaltet werden. Der Einbau ist einfach, da die Dichtung mit der Hülse zusammengebracht und gemeinsam mit dieser in das Gehäuse eingeschoben wird.

Im folgenden wird die Erfindung anhand von Ausführungsbeispielen, unter Bezugnahme auf die beiliegenden Zeichnungen, näher erläutert. Es zeigen:
- Fig. 1: einen Teilschnitt durch ein erfindungsgemässes Anschlussstück mit dem Endstück eines Wellrohres in der Einbauposition,
- Fig. 2: einen Teilschnitt durch das Gehäuse und die Hülse eines erfindungsgemässen Anschlussstückes in der Montageposition.

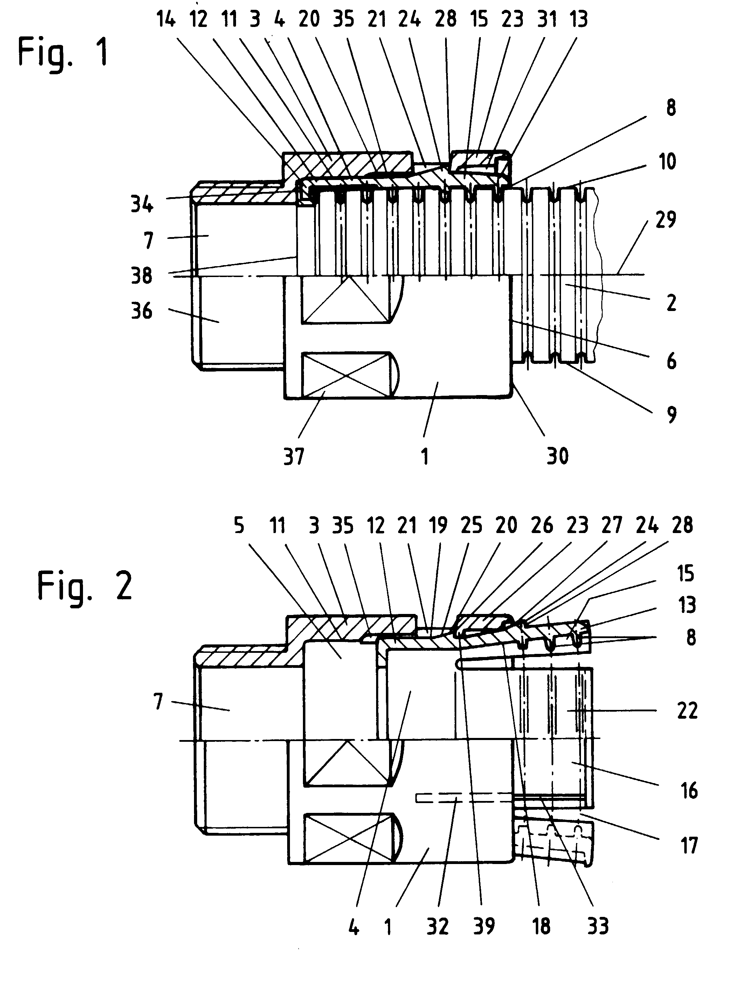

Fig. 1 zeigt ein Anschlussstück 1, welches für die Verbindung eines Wellrohres 2 mit einem nicht dargestellten Maschinengehäusebestimmt ist. Das Anschlussstück 1 besteht aus einem Gehäuse 3, in welches eine Hülse 4 eingebracht ist. Das Anschlussstück 1 verfügt über einen Gewindezapfen 36, über welchen in bekannter Weise die Verbindung zum Maschinengehäuse hergestellt wird. An Stelle einer Gewindeverbindung kann eine an sich bekannte Verbindung mit federnden Schnappelementen, wie sie beispielsweise in US Nr. 4,575,133 beschrieben ist, angeordnet sein. Das Gehäuse 3 ist rohrförmig und weist im Zentrum einen Kernhohlraum 5 und daran anschliessend einen Durchlass 7 auf, welcher sich durch den Gewindezapfen 36 erstreckt. Dieser Durchlass 7 dient der Durchführung von Kabeln oder anderen Elementen, welche im Wellrohr 2 geführt werden. Am Gehäuse 3 sind Kontaktflächen 37 angeordnet, welche für das Ansetzen von Hilfswerkzeugen zur Montage des Gehäuses 3 bestimmt sind. Im dargestellten Beispiel besteht das Gehäuse 3 und die Hülse 4 aus einem Kunststoff, beispielsweise einem Polyamid. Damit lassen sich diese Elemente in einfacher Weise durch Spritzgiessen herstellen. In der dargestellten Einbauposition des Endes des Wellrohres 2 im Anschlussstück 1 ist die Hülse 4 und damit auch das Endstück des Wellrohres 2 vollständig in den Kernhohlraum 5 des Gehäuses 3 eingeschoben. Damit befindet sich ein am innern Ende 12 der Hülse 4 angeordneter Kragen 14 im Bereiche einer Anschlagfläche 38 am Ende des Kernhohlraumes 5 des Gehäuses 3. Am äusseren Ende 13 der Hülse 4 angeordnete Nocken 8 greifen in Vertiefungen 9 am Mantel 10 des Wellrohres 2 und halten dieses in der Einbauposition fest. Die Hülse 4 weist am Aussenmantel 19 ein Sperrelement 24 auf, welches in ein Gegenstück in der Form einer Aussparung 21 am Gehäuse 3 eingreift. Eine Anschlagfläche 28 an diesem Sperrelement 24 blockiert die Hülse 4 in der Einbauposition. Diese Anschlagfläche 28 liegt an einem Bereich des Gehäuses 3 an, welcher einen Aussenring 23 bildet. Dieser Aussenring 23, welcher Bestandteil des Gehäuses 3 ist, hält die federnden Mantelelemente 15, 16 der Hülse 4 in der Einbauposition und drückt sie in Richtung der Längsachse 29 der Hülse 4 gegen den Mantel 10 des Wellrohres 2.

Am innern Ende der Hülse 4 ist um den Kragen 14 eine Dichtungskappe 34 eingelegt, welche im dargestellten Beispiel aus einem geeigneten Kunststoff gebildet ist. Diese Dichtungskappe 34 umschliesst den Kragen 14 der Hülse 4 und erstreckt sich entlang des Aussenmantels 10 des Endes des Wellrohres 2 in Richtung der Einstecköffnung 6. Dadurch wird zwischen der Anschlagfläche 38 am Gehäuse 3 und der Mantelfläche 10 des Wellrohres 2 eine sichere und geeignete Dichtung gewährleistet.

In Fig. 2 sind das Gehäuse 3 und die Hülse 4 in einer Montage- bzw. Vormontageposition dargestellt, wobei die einzelnen Elemente besser erkennbar sind. Zur besseren Verständlichkeit wurde das Wellrohr 2 weggelassen. Die Hülse 4 weist an ihrem äusseren Ende 13 Einschnitte 17 auf, welche in Richtung der Längsachse 29 verlaufen. Im dargestellten Beispiel sind vier derartige Einschnitte 17 angeordnet, welche das äussere Ende 13 der Hülse 4 in vier Mantelelemente 15, 16 aufteilen. Im dargestellten Beispiel ist die Hülse 4 so geformt, dass die Mantelelemente 15, 16 in Richtung des äusseren Endes 13 divergieren und dadurch der von diesen Mantelelementen 15, 16 umschlossene Innenhohlraum 22 aufgeweitet wird. Durch die Elastizität des Materials der Hülse 4 bilden die Mantelelemente 15, 16 federnde Elemente, welche mit Hilfe des Aussenringes 23 am Gehäuse 3 gegen die Längsachse 29 gedrückt werden können. In der in Fig. 2 dargestellten Montageposition federn die Mantelelemente 15, 16 nach aussen, sodass der freie Zwischenraum zwischen gegenüberliegenden Nocken 8 grösser ist als der Aussendurchmesser des Wellrohres 2. An dem im obern Bereich dargestellten Mantelelement 15 befindet sich am Aussenmantel 19 ein Positionierelement 20 und ein Sperrelement 24. Diese beiden Elemente 20 und 24 weisen je eine schräge Auflauffläche 25 bzw. 27 auf, welche Teil eines Nockens ist. An die schrägen Auflaufflächen 25 bzw. 27 schliesst sich je eine Anschlagfläche 26 bzw. 28 an. Das Positionierelement 20 weist dabei gegenüber dem Aussenmantel 19 eine geringere Ueberhöhung auf als das Sperrelement 24. Das Positionierelement 20 und das Sperrelement 24 sind in Richtung der Längsachse 29 mit einem Abstand zueinander angeordnet, welcher etwa dem Verschiebeweg der Hülse 4 von der in Fig. 2 dargestellten Montageposition in die in Fig. 1 dargestellte Einbauposition entspricht. Im Gehäuse 3 ist eine Aussparung 21 angeordnet, welche das Gegenstück zum Positionierelement 20 bzw. Sperrelement 24 bildet. In der Montageposition greift das Positionierelement 20 in diese Aussparung 21 ein und hält die Hülse 4 im Kernhohlraum 5 des Gehäuses 3 fest. Solange kein Wellrohr 2 in die Hülse 4 eingeschoben ist, kann die Hülse 4 in einfacher Weise aus dem Gehäuse 3 ein- und ausgebaut werden, da das Mantelelement 15 elastisch in Richtung der Achse 29 ausweichen kann. An der Innenfläche 18 der Mantelelemente 15, 16 sind mindestens in einem Teilbereich Nocken 8 angeordnet, welche der formschlüssigen Verbindung mit den Vertiefungen 9 am Wellrohr 2 dienen. Wenn das Anschlussstück 1 zur Aufnahme von Wellrohren 2 mit gleichem Aussendurchmesser, aber unter schiedlich geformten Vertiefungen 9 dienen soll, können die Hülsen 4 jeweils in einfacher Weise durch Hülsen ersetzt werden, welche entsprechende Nocken 8 aufweisen. Da der Aussenring 23 im Bereich zwischen der Aussparung 21 und der Frontfläche 30 des Gehäuses 3 elastisch ausgebildet ist, kann die Hülse 4 aber auch auf dem Ende des Wellrohres 2 vormontiert und dann gemeinsam mit diesem in den Kernhohlraum 5 am Gehäuse 3 eingeschoben werden.

Beim vollständigen Einschieben der Hülse 4 in den Kernhohlraum 5 muss das Sperrelement 24 unter dem Anschlag 39 am Gehäuse 3 durchgeschoben werden, sodass es in die Aussparung 21 einrasten kann. Da in dieser Position vor dem Erreichen der Einbauposition das Mantelelement 15 am Aussenmantel 10 des Wellrohres 2 anliegt, ist der Aussenring 23 in diesem Bereiche elastisch ausgebildet, sodass dieser Ringbereich nach aussen ausweichen und das Sperrelement 24 durchlassen kann. Nach dem Durchlassen schnappt der Anschlag 39 zurück, und die am Nocken 39 anliegende Anschlagfläche 28 sperrt die Hülse 4 gegen Rückzugsbewegungen. Wie in Fig. 1 erkennbar ist, ist im Bereiche zwischen der Aussparung 21 und der Frontfläche 30 am Innenmantel des Gehäuses 3 eine zusätzliche Aussparung 31 vorgesehen. Diese Aussparung 31 dient der Einführung eines Werkzeuges, z.B. der Spitze eines Schraubenziehers, mittels welchem dieser Teilbereich des Aussenringes 23 nach aussen ausgelenkt und die Verbindung zwischen Nocken 39 und Sperrelement 24 aufgehoben werden kann. Damit kann das Wellrohr 2 aus der Einbauposition zurückgezogen und die Verbindung zwischen Anschlussstück 1 und Wellrohr 2 gelöst werden. Das Lösen dieser Verbindung ist jedoch nur mit dem Zusatzwerkzeug möglich, sodass die Verbindung zwischen Wellrohr 2 und Anschlussstück 1 im Betriebszustand immer gewährleistet bleibt. Ein Lösen der Verbindung durch ungewollte Fremdeinwirkung ist praktisch unmöglich. Das in die Aussparung 31 einzuführende Hilfswerkzeug wird in Richtung der Längsachse 29 bzw. der Einschubrichtung des Wellrohres 2 betätigt. Aus dieser Richtung ist das Anschlussstück normalerweise immer zugänglich, sodass das nachträgliche Lösen der Verbindung zwischen Wellrohr 2 und Anschlussstück 1 auch bei schwierigen Einbauverhältnissen möglich bleibt.

Bei der beschriebenen Ausführungsart eines Anschlussstückes 1 ist nur ein Mantelelement 15 mit dem erfindungsgemässen Positionierelement 20 und dem Sperrelement 24 versehen. Es könnten aber auch zwei oder alle Mantelelemente 15, 16 mit entsprechenden Elementen 20, 24 versehen sein. Dementsprechend müssten dann im Gehäuse 3 auch mehrere Aussparungen bzw. Gegenstücke 21 vorgesehen sein. Um die richtige Positionierung der Hülse 4 im Gehäuse zu gewährleisten, ist an einem der Mantelelemente 16 eine nach aussen gerichtete Längsrippe 33 angeordnet. Am Innenmantel 11 des Gehäuses 3 ist eine entsprechende Längsnute 32 eingearbeitet, welche sich von der Frontfläche 30 in Richtung zur Anschlagfläche 38 erstreckt. Im vormontierten Zustande der Hülse 4 im Gehäuse 3 greift die Längsrippe 33 bereits teilweise in die Längsnute 32 ein, sodass ein funktiongsgerechtes Zusammenschieben der Hülse 4 und des Gehäuses 3 gewährleistet ist. Beim vollständigen Verschieben der Hülse 4 in die Einbauposition im Gehäuse 3 wird die Längsrippe 33 in der Längsnute 32 geführt. Im weitern ist am Innenmantel 11 des Gehäuses 3 im Bereiche zwischen Aussparung 21 und Anschlagfläche 38 eine weitere Nute 35 eingearbeitet, welche so bemessen ist, dass das Positionierelement 20 in dieser Nute 35 frei verschoben werden kann.

## Patentansprüche

1. Verbindungs- und Anschlussstück (1) für Wellrohre (2) mit mindestens einem, von einem Gehäuse (3) umschlossenen Kernhohlraum (5) mit einer Einstecköffnung (6) zur Aufnahme eines Endes des Rohres (2) und einem gegenüberliegenden Durchlass (7), einer zwischen dem Aussenmantel (10) des Endes des Rohres (2) und dem Innenmantel (11) des Kernhohlraumes (5) des Gehäuses (3) angeordneten Hülse (4), wobei diese Hülse (4) an einem Ende (13) durch Einschnitte (17) in Mantelelemente (15, 16) aufgeteilt ist, die freien Enden dieser Mantelelemente (15, 16) elastisch beweglich sind und an der Aussenseite der Mantelelemente (15, 16) Wirkelementen (20, 24) sowie an der Innenseite der elastisch beweglichen Mantelelemente (15, 16) Nocken (8) für den Eingriff in die Vertiefungen (9) am Mantel (10) des Wellrohres (2) vorgesehen sind und mit einem Aussenring (23) zur Feststellung der elastischen Mantelelemente (15, 16) in einer Sperrposition, wobei die Hülse (4) an dem gegen den Durchlass (7) gerichteten inneren Ende (12) einen radial nach innen gerichteten Kragen (14) aufweist welcher für die Stirnfläche des Endes des Rohres (2) einen Mitnehmer bildet, die beweglichen Mantelelemente (15, 16) an dem im Bereiche der Einstecköffnung (6) liegenden anderen äusseren Ende (13) der Hülse (4) angeordnet und in der Ausgangsposition nach aussen divergierend und als federnde Mantelelemente (15,16) ausgebildet sind, am Aussenmantel (19) der Hülse (4) mindestens ein Positionierelement (20) angeordnet ist, welches als Wirkelement mit einem Gegenstück (21) im Gehäuse (3) zusammenwirkt und die Hülse (4) in einer Montageposition im Gehäuse (3) positioniert, in dieser Montageposition der freie Durchmesser des Hohlraumes (22) am äusseren Ende (13) der Hülse (4) zwischen gegenüberliegenden Nocken (8) mindestens so gross ist wie der Aussendurchmesser des Wellrohres (2), zusätzlich zum Positionierelement (20) an mindestens einem der federnden Mantelelemente (15) der Hülse (4) an der Aussenfläche (19) ein zweites Wirkelement in der Form eines Sperrelement (24) angeordnet ist, dieses Sperrelement (24) zum Positionierelement (20) einen Abstand aufweist, dieser Abstand der Länge der Verschiebebewegung der Hülse (4) von der Montageposition in eine Einbauposition entspricht und das Sperrelement (24) in der Einbauposition der Hülse (4) in das Gegenstück (21) im Gehäuse (3) eingreift und wobei der um die Einstecköffnung (6) liegende Bereich des Gehäuses (3) den Aussenring (23) zur Feststellung der federnden Mantelelemente (15,16) der Hülse (4) bildet.

2. Verbindungs- und Anschlussstück nach Patentanspruch 1, dadurch gekennzeichnet, dass das Gegenstück (21) zum Positionierelement (20) und zum Sperrelement (20) an der Hülse (4) ein Durchbruch im Gehäuse (3) ist.

3. Verbindungs- und Anschlussstück nach einem der Patentansprüche 1 oder 2, dadurch gekennzeichnet, dass das Positionierelement (20) und das Sperrelement (24) am Aussenmantel (19) der Hülse (4) je aus einem radial nach aussen gerichteten Nocken mit einer gegen das innere Ende (12) der Hülse (4) gerichteten schrägen Auflauffläche (25,27) und einer daran annschliessenden etwa rechtwinklig zur Längsachse (29) der Hülse (4) verlaufenden Anschlagfläche (26,28) gebildet sind.

4. Verbindungs- und Anschlussstück nach einem der Patentansprüche 1 bis 3, dadurch gekennzeichnet, dass zwischen der Frontfläche (30) des Gehäuses (3) und dem Gegenstück (21) zum Positionierelement (20) beziehungsweise Durchbruch am Innenmantel des Gehäuses (3) eine Aussparung (31) zur Einführung eines Werkzeuges angeordnet ist.

5. Verbindungs- und Anschlussstück nach einem der Patentansprüche 1 bis 4, dadurch gekennzeichnet, dass der Bereich des Gehäuses (3) zwischen der Frontfläche (30) und dem Gegenstück (21) zum Positionierelement (20) beziehungsweise Durchbruch elastisch ist.

6. Verbindungs- und Anschlussstück nach einem der Patentansprüche 1 bis 5, dadurch gekennzeichnet, dass am Innenmantel (11) des Gehäuses (3) eine Längsnute (32) und am Aussenmantel (19) der Hülse (4) eine in diese Längsnute (32) eingreifende Längsrippe (33) angeordnet sind.

7. Verbindungs- und Anschlussstück nach einem der Patentansprüche 1 bis 6, dadurch gekennzeichnet, dass im Bereiche des Kragens (14) und/oder des inneren Endes (12) der Hülse (4) eine Dichtungskappe (34) eingelegt ist.

8. Verbindungs- und Anschlussstück nach einem der Patentansprüche 1 bis 7, dadurch gekennzeichnet, dass am Innenmantel (11) des Gehäuses (5) und anschliessend an das Gegenstück (21) für das Positionierelement (20), in Richtung gegen das innere Ende (12) der Hülse (4) eine Nute (35) zur Aufnahme des Positionierelementes (20) angeordnet ist.

## Claims

1. Connection and joining piece (1) for corrugated tubes (2), having at least one core cavity (5) surrounded by a housing (3) and having an insertion opening (6) for receiving one end of the tube (2) and an opposing throat (7), a sleeve (4) disposed between the outer casing (10) of the end of the tube (2) and the inner casing (11) of the core cavity (5) of the housing (3), wherein said sleeve (4) is divided at one end (13) by notches (17) into casing elements (15, 16), the free ends of said casing elements (15, 16) are elastically movable and there are provided at the outside of the casing elements (15, 16) acting elements (20, 24) as well as at the inside of the elastically movable casing elements (15, 16) cams (8) for engagement into the recesses (9) in the casing (10) of the corrugated tube (2), and having an outer ring (23) for fixing the elastic casing elements (15, 16) in a locking position, wherein the sleeve (4) at the inner end (12) directed towards the throat (7) has a radially inwardly directed collar (14) which forms a driver for the end face of the end of the tube (2), the movable casing elements (15, 16) are disposed at the other outer end (13) of the sleeve (4) situated in the region of the insertion opening (6) and in the starting position are designed so as to be outwardly divergent and in the form of spring casing elements (15, 16), there is disposed on the outer casing (19) of the sleeve (4) at least one positioning element (20) which, as an acting element, cooperates with a counterpart (21) in the housing (3) and positions the sleeve (4) in an assembly position in the housing (3), in said assembly position the clear diameter of the cavity (22) at the outer end (13) of the sleeve (4) between opposing cams (8) is at least as great as the external diameter of the corrugated tube (2), in addition to the positioning element (20) there is disposed on at least one of the spring casing elements (15) of the sleeve (4) on the outer surface (19) a second acting element in the form of a locking element (24), said locking element (24) is at a distance from the positioning element (20), said distance corresponds to the length of the displacement movement of the sleeve (4) from the assembly position into a fitted position and the locking element (24) in the fitted position of the sleeve (4) engages into the counterpart (21) in the housing (3) and wherein the region of the housing (3) situated around the insertion opening (6) forms the outer ring (23) for fixing the spring casing elements (15, 16) of the sleeve (4).

2. Connection and joining piece according to claim 1, characterized in that the counterpart (21) to the positioning element (20) and to the locking element (20) on the sleeve (4) is a breach in the housing (3).

3. Connection and joining piece according to claim 1 or 2, characterized in that the positioning element (20) and the locking element (24) on the outer casing (19) of the sleeve (4) are each formed by a radially outwardly directed cam with an inclined run-on surface (25, 27) directed towards the inner end (12) of the sleeve (4) and an adjoining stop face (26, 28) extending substantially perpendicular to the longitudinal axis (29) of the sleeve (4).

4. Connection and joining piece according to one of claims 1 to 3, characterized in that a recess (31) for introducing a tool is disposed between the front surface (30) of the housing (3) and the counterpart (21) to the positioning element (20) or the breach in the inner casing of the housing (3).

5. Connection and joining piece according to one of claims 1 to 4, characterized in that the region of the housing (3) between the front surface (30) and the counterpart (21) to the positioning element (20) or breach is elastic.

6. Connection and joining piece according to one of claims 1 to 5, characterized in that a longitudinal groove (32) is disposed in the inner casing (11) of the housing (3) and a longitudinal rib (33), which engages into said longitudinal groove (32), is disposed on the outer casing (19) of the sleeve (4).

7. Connection and joining piece according to one of claims 1 to 6, characterized in that a sealing cap (34) is inserted in the region of the collar (14) and/or the inner end (12) of the sleeve (4).

8. Connection and joining piece according to one of claims 1 to 7, characterized in that a groove (35) for receiving the positioning element (20) and directed towards the inner end (12) of the sleeve (4) is disposed in the inner casing (11) of the housing (5) and adjoining the counterpart (21) to the positioning element (20).

## Revendications

1. Pièce de jonction et de raccord (1) pour des tubes ondulés (2) comprenant au moins une cavité intérieure (5) qui est renfermée par un corps (3) et qui présente une ouverture d'enfoncement (6) pour recevoir une extrémité du tube (2) et un passage situé en face (7), une douille (4) agencée entre l'enveloppe externe (10) de l'extrémité du tube (2) et l'enveloppe interne (11) de la cavité intérieure (5) du corps (3), cette douille (4) étant, à une extrémité (13), divisée par des encoches (17) en éléments d'enveloppe (15, 16), les extrémités libres de ces éléments d'enveloppe (15, 16) étant élastiquement déplaçables, des éléments actifs (20, 24) étant prévus sur la face externe des éléments d'enveloppe (15, 16) et, sur la face interne des éléments d'enveloppe élastiquement déplaçables (15, 16), des saillies (8) pour pénétrer dans les évidements (9) de l'enveloppe (10) du tube ondulé (2), et une bague externe (23) destinée à la fixation des éléments d'enveloppe élastiques (15, 16) dans une position d'arrêt, la douille (4) présentant un collet (14), qui est dirigé radialement vers l'intérieur à l'extrémité interne (12) dirigée vers le passage (7) et qui forme pour la surface frontale de l'extrémité du tube (2) un élément d'entraînement, les éléments d'enveloppe déplaçables (15, 16) étant agencés à l'autre extrémité externe (13) de la douille (14), située dans la zone de l'ouverture d'enfoncement (6), et étant divergents vers l'extérieur dans la position de départ et réalisés sous la forme d'éléments d'enveloppe élastiques (15, 16), au moins un élément de positionnement (20), qui coopère comme élément actif avec une contre-pièce (21) du corps (3) et positionne la douille (4) dans une position de montage dans le corps (3), étant agencé sur la surface externe (19) de la douille (4), le diamètre libre de la cavité (22) dans cette position de montage étant, à l'extrémité externe (13) de la douille (4) entre les saillies opposées (8), au moins aussi grand que le diamètre externe du tube ondulé (2), un deuxième élément actif étant agencé en plus de l'élément de positionnement (20) sur au moins un des éléments d'enveloppe élastiques (15) de la douille (4) à la surface externe (19), sous la forme d'un élément d'arrêt (24), cet élément d'arrêt (24) étant à une certaine distance de l'élément de positionnement (20), cette distance correspondant à la longueur du déplacement par coulissement de la douille (4) depuis la position de montage dans une position d'encastrement, l'élément d'arrêt (24) pénétrant dans la position d'encastrement de la douille (4) dans la contre-pièce (21) du corps (3), la zone du corps (3), située autour de l'ouverture d'enfoncement (6), formant la bague extérieure (23) destinée à la fixation des éléments d'enveloppe élastiques (15, 16) de la douille (4).

2. Pièce de jonction et de raccord suivant la revendication 1, caractérisée en ce que la contre-pièce (21) pour l'élément de positionnement (20) et l'élément d'arrêt (24) de la douille (4) est une ouverture dans le corps (3).

3. Pièce de jonction et de raccord suivant l'une des revendications 1 et 2, caractérisée en ce que l'élément de positionnement (20) et l'élément d'arrêt (24) sont formés sur l'enveloppe externe (19) de la douille (4) chacun à partir d'une saillie dirigée radialement vers l'extérieur qui présente une surface d'accès inclinée (25, 27) dirigée vers l'extrémité interne (12) de la douille (4) et d'une surface de butée (26, 28) raccordée à elle approximativement perpendiculairement à l'axe longitudinal (29) de la douille (4).

4. Pièce de jonction et de raccord suivant l'une des revendications 1 à 3, caractérisée en ce qu'entre la surface frontale (30) du corps (3) et la contre-pièce (21) pour l'élément de positionnement (20) ou respectivement l'ouverture de l'enveloppe interne du corps (3) est agencé un évidement (31) pour l'introduction d'un outil.

5. Pièce de jonction et de raccord suivant l'une des revendications 1 à 4, caractérisée en ce que la zone du corps (3) entre la surface frontale (30) et la contre-pièce (21) pour l'élément de positionnement (20) ou respectivement l'ouverture est élastique.

6. Pièce de jonction et de raccord suivant l'une des revendications 1 à 5, caractérisée en ce qu'une rainure longitudinale (32) est agencée sur l'enveloppe interne (11) du corps (3) et en ce qu'une nervure longitudinale (33) pénétrant dans cette rainure longitudinale (32) est agencée sur l'enveloppe externe (19) de la douille (4).

7. Pièce de jonction et de raccord suivant l'une des revendications 1 à 6, caractérisée en ce qu'un capuchon d'étanchéité (34) est inséré dans la zone du collet (14) et/ou de l'extrémité interne (12) de la douille (4).

8. Pièce de jonction et de raccord suivant l'une des revendications 1 à 7, caractérisée en ce qu'une rainure (35) destinée à recevoir l'élément de positionnement (20) est agencée sur l'enveloppe interne (11) du corps (3) et ensuite sur la contre-pièce (21) pour l'élément de positionnement (20), dans une direction vers l'extrémité interne (12) de la douille (4).
